# EUROPEAN PATENT APPLICATION

(11) **EP 2 437 524 A1**
(43) Date of publication of application: **04.04.2012**
(21) Application number: 09845091.9
(22) Date of filing: 01.09.2009
(51) Int. Cl.: H04W 4/00

(54) **M2M SERVICE PLATFORM AND WORK METHOD THEREOF**

(30) Priority: 27.05.2009 CN 200910107744
(71) Applicant: ZTE Corporation, Shenzhen, Guangdong 518057 (CN)
(72) Inventor: LI, Yu, Guangdong 518057 (CN)
(74) Representative: Onsagers AS
(86) International application number: PCT/CN2009/073670
(87) International publication number: WO 2010/135875

(57) **Abstract**

The present invention discloses an M2M (Machine to Machine) service platform and a working method thereof. The above M2M service platform comprises: a service procedure editing module, a service management module, and a service executing module, wherein the service procedure editing module is configured to combine function units, edit a service logic and generate a service; the service management module is configured to load and manage the service and inform the service executing module; and the service executing module is configured to receive a notification from the service management module, parse a script of the service logic, and perform a corresponding action according to the parsed result.

## Description

### Field of the Invention

The present invention relates to the communication field, and in particular to an M2M (Machine to Machine) service platform and a working method thereof.

### Background of the Invention

"M2M" refers to a wireless data service which takes the wireless network of a mobile network operator as the platform, uses various transmission modes (CDMA/GSM/SMS, etc.), and serves the industry user of M2M via specific industry terminals.

Regarding technical implementation, the currently available M2M platforms only support the integration of industry applications provided by the application providers via standardized interface protocols, and under this technical architecture, it is hard for the application providers to provide customized development for the personalized demand of all users, which makes the M2M platform unable to meet the personalized demand of the users and limits the promotion of M2M service.

Under the existing technical background, it has to develop the corresponding M2M application for one new M2M service demand, and the application developers need to invest more human resources and material resources to complete the survey, design, encoding, and testing links. It is further needed to configure the hardware system to install the newly developed application system and perform docking and debugging with the M2M platform. The high costs and long development period brought by this development manner apparently cannot meet the demand of the personal and household application field where the personalization degree is high, the demand changes faster, and the punctuality for demand response is highly required.

Accordingly, the M2M platform is objectively required to be provided with the general service creating ability to provide service development and running platform for the users. Necessary technical means is used to enable this platform to be easily used sufficiently, and the ordinary users can define by themselves the service logic they need, thus meeting the personalized demand of the user himself.

Under the existing technology condition, developing an M2M application generally needs the following steps:
Step I: developing different interfaces according to the access mode (such as, short message, GPRS, CDMA 1X, or other wired or wireless data network) of the M2M terminal used by the customer;
Step II: developing an application system according to user demand, where it is generally needed to perform encoding on the basis of programming language such as C/C++ or JAVA and perform database development.;
Step III: purchasing hardware devices, generally including server, network device, frame, etc. and requiring a certain area to install these devices; and
Step IV: installing the application software, the development of which is completed, in the hardware device and completing the debugging.

However, this technology has the following defects:
first, since an M2M terminal may communicate with the applications by means of short message, GPRS, CDMA 1X or other wired or wireless data network, and it is needed to provide interfaces for the above different access modes when being applied, which increases the complexity of application development;
secondly, it is difficult to meet the personalized demand of the user, and the application system does not possess openness and cannot timely adjust and deploy a new service procedure; and
additionally, it is needed to invest a large amount of human resources to perform the development, testing and installation and debugging work; furthermore, the costs of hardware devices are rather high and one set of hardware device generally can only belong to one industry user and is unable to be shared by a plurality of industry users.

### Summary of the Invention

The technical problem to be solved by the present invention is the problem that M2M application cannot meet the personalized demand of various users, the costs of developing new M2M applications are high, the period of developing new M2M applications is long and the deployment costs of new M2M applications are high, the difficulty of debugging is big, etc. and an M2M service platform and a working method thereof are provided to solve these problems.

An M2M service platform is provided according to one aspect of the present invention.

The M2M service platform according to the present invention comprises: a service procedure editing module, a service management module, and a service executing module, wherein,
said service procedure editing module is configured to combine function units, edit a service logic, and generate a service;
said service management module is configured to load and manage said service and send a notification to said service executing module; and
said service executing module is configured to receive the notification from said service management module, parse a script of said service logic, and performing a corresponding action according to the parsed result.

In the above platform, it further comprises a data management module which is configured to create a service data table and import service data into said service data table, wherein said service executing module inquires service data relevant to a service according to said service data table if the relevant data is needed, when said service executing module is executing the service.

In the above platform, the data management module comprises a service data defining submodule and a service data importing submodule, said service data defining submodule configured to define a data structure of service data to allow a user to input data according to the data structure, generate a corresponding sentence according to the input data of the user, and create said service data table in a database; and said service data importing submodule configured to import said service data selected by the user into said service data table.

In the above platform, the data management module further comprises a service data displaying submodule, said service data displaying submodule configured to provide a user interface to allow the user to select a service data table created by himself or authorized to access.

In the above platform, the service executing module comprises a database agent submodule, said database agent submodule configured to use a java database connectivity (JDBC) to connect to a heterogeneous database so as to allow said service executing module to inquire service data relevant to the service in said heterogeneous database if the relevant data is needed, when said service executing module is executing the service.

In the above platform, it further comprises a platform interface module, said platform interface module configured to receive and forward information generated when said service executing module is executing a service.

In the above platform, the service executing module comprises an adapting submodule, said adapting submodule connected to said platform interface module to complete adaptation and interface function ofa service.

In the above platform, it further comprises a service debugging module, said service debugging module configured to test a service generated by said service procedure editing module.

A working method for an M2M service platform is provided according to another aspect of the present invention.

The working method for an M2M service platform according to the present invention comprises the following steps:
combining function units, editing a service logic, and generating a service by a service procedure editing module;
loading and managing said service and sending a notification to a service executing module by a service management module; and
receiving the notification from said service management module by the service executing module, parsing a script of said service logic, and performing a corresponding action according to the parsed result.

In the above method, said function unit is provided with at least one fundamental ability of constructing said service logic, said fundamental ability including communication ability, file access ability, calculating ability, database access ability, and procedure control ability.

As compared with the prior art, the M2M service platform and the working method thereof of the present invention not only meet the personalized demand of various users and also provide a convenient and fast service creating method for the user by a service procedure editing module combining the function units, editing a service logic, and quickly generating an M2M application defined by the user himself. Additionally, this M2M service platform has the general-purpose service creating ability and debugging function and different services can use the same M2M service platform, which makes the costs of developing new M2M applications lower, the period shorter, the deployment costs of new M2M applications lower, and the difficulty of debugging smaller, which is helpful to increase the popularization rate of M2M service platform and service in the personal and household application fields.

Other features and advantages of the present invention will be described in the following description and partly become obvious from the description, or be understood by implementing the present invention. The objects and other advantages of the present invention can be realized and obtained through the structures specially indicated by the description, claims and drawings.

### Brief Description of the Drawings

The drawings herein are used to provide a further understanding of the present invention and form a part of the specification, which are used to explain the present invention together with the embodiments of the present invention without unduly limiting the scope of the present invention. In the drawings:
Fig. 1 is a schematic diagram of an M2M service platform module according to the embodiments of the present invention;
Fig. 2 is a schematic diagram of an M2M service platform data management module according to the embodiments of the present invention;
Fig. 3 is a schematic diagram of an M2M service platform service executing module according to the embodiments of the present invention; and
Fig. 4 is a schematic diagram of the flow of a working method for an M2M service platform according to the embodiments of the present invention.

### Detailed Description of Embodiments

The embodiments of the present invention and the features in the embodiments can be combined with each other if there is no conflict.

The preferred embodiments of the invention will be described in conjunction with the accompanying drawings, and it shall be understood that the preferred embodiments described here are only for the purpose of illustration and not to limit the present invention.

An M2M service platform is first provided according to the embodiments of the present invention.

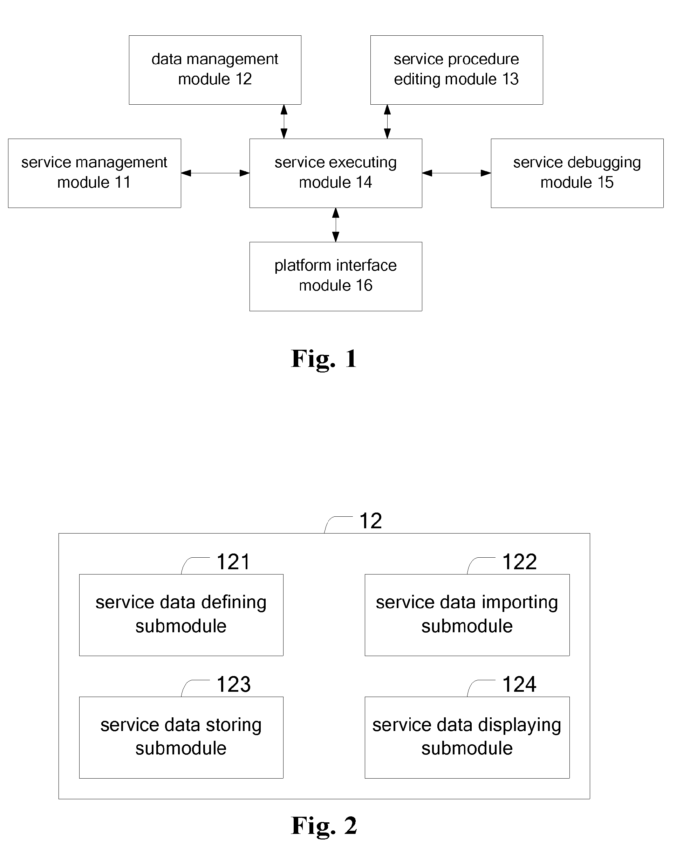

Fig. 1 is a schematic diagram of an M2M service platform module according to the embodiments of the present invention, and as shown in Fig. 1, the M2M service platform according to the embodiments of the present invention comprises: a service management module **11,** a data management module **12,** a service procedure editing module **13,** a service executing module **14,** a service debugging module **15,** and a platform interface module **16.**

In this case, the service management module **11** configures the basic service information, sets service parameters and service triggering mode, and manages the loading, activation, deactivation, and unloading of the service. The data management module **12** provides a user with a tool of describing the metadata of the service data, wherein the user only needs to describe the metadata of the service data, the metadata including field name, field data type and field length, the data management module **12** will generate a SQL sentence according to the definition of the metadata of the service data and create a data table in a database. The data management module **12** further provides a data batch importing function, wherein the user can import the data into this service data table in batches. Additionally, this module provides the service data inquiry and display function. The service procedure editing module **13** provides a graphical service procedure editing function for the user, wherein the user calls a fundamental function unit (including communication ability, calculation, processing character string, logic judgment, procedure control, database access, etc.) to construct a service procedure, generate a service, and access the self-defined service data. The service executing module **14** executes the service generated by the service procedure editing module **13.** The service generated by the editing operation of the user can perform simulation test via the service debugging module **15** and simulates the input and output of the service procedure. The platform interface module **16** is an interface module between the M2M platform and the M2M service platform of the present invention, wherein the platform interface module **16** complies with the currently available M2M platform and application interface standard.

The function of each module will now be described in detail hereinafter.

### (1) service management module 11

The service management module **11** is used for configuring the basic information of M2M service, managing the parameters of the service, performing loading, activation, deactivation and unloading operations to the service.

The basic information of the M2M service includes: service name, service code, service description information, service effective period, the communication mode of sending downwardly service messages. The service management module **11** provides a user interface to allow an operator to maintain the above information.

The service parameters generally are the data the values of which are relatively stable in the service procedure, and at the same time these data are allowed to be modified by the operator so as to affect the execution of the service procedure. The service management module **11** provides a user interface to allow the operator to perform modification operation to the service parameters.

After the operation of editing the M2M service is finished, the service management module **11** informs the service executing module **14** of the location and identifier of the service, which is called as the service loading operation.

The operator activates the loaded service via the service management module **11,** i.e. inform the service executing module **14** to start to execute this service. The operator can also deactivate the activated service via the service management module **11** to end the serving of this service. Or, this service is unloaded, and the service executing module **14** releases such resources as relevant memory, etc.

### (2) service management module 12

The data management module **12** manages the service data. The service data is the data which is needed to be stored in the database during the execution of the service. The service data can be pre-imported, or can also be generated during the execution of the service procedure and stored by the service executing module **14.**

Fig. 2 is a schematic diagram of an M2M service platform data management module **12** according to the embodiments of the present invention, and as shown in Fig. 2, the data management module **12** includes a service data defining submodule **121,** a service data importing submodule 122, a service data storing submodule **123** and a service data displaying submodule **124.**

The service data defining submodule **121** is used for providing a user interface to allow the user to describe the data structure of the service data. The data structure of the service data includes: field name, text description of field, data type of field, and the maximum length of field.

After a user has filled and submitted the description of the field data structure, the service data defining submodule **121** generates a SQL sentence according to the above description information and creates a service data table in the database for the user.

The service data importing submodule **122** is used for providing a user interface to allow the user to import the service data in batches. The user selects a service data table to which the data is needed to be imported and then submits a data file. The data file can be a text file which designates the separator between fields, or, can also be an EXCEL sheet.

The service data storing submodule **123** is used for storing the imported service data or the data generated by the service procedure. The service data storing submodule **123** divides the authority of accessing the data according to the user, and only the user who creates this service data or the user authorized by the user who creates this service data has the right to access this data on a WEB page and during the service procedure.

The service data displaying submodule **124** is used for providing a user interface to allow the user to select a service data table created by himself or authorized to be accessed and set an inquiry condition to inquire service data, thus it is convenient for the user to inquire his own service data. The inquiry result is displayed in manner of the list.

### (3) service procedure editing module 13

The service procedure editing module **13** constructs an M2M application by combining a series of function units. A function unit is generally provided with one or more fundamental abilities for constructing an M2M application, wherein the fundamental abilities mainly include communication ability, file access ability, calculating ability, database access ability, and procedure control ability.

The communication ability: the fundamental communication ability of providing short messages, multimedia messages, USSD, and WAP Push.

The file access ability: providing operations to a file, wherein the operations include the creating, reading/writing, deleting operations of the file.

The calculating ability: including the basic arithmetic operations of addition, subtraction, multiplication, division, etc., the character string process (including acquiring the length of the character string, intercepting to form substring, conversion between capital letters and small letters, searching characters or location of substring, etc.).

The database access ability: encapsulating common access operations to data, wherein the common access operations include inquiring, inserting, deleting, updating the record, and calling the storage process. A graphical operation interface is provided to allow the operator to select in the list a data table generated by the service data defining submodule **121,** and after the data table has been selected, the system displays the data fields of this data table in the form of list and the operator can select a data field to be inquired; and the operator can edit a logic expression to be the inquiry condition by the operation interface provided by the data management module **12,** and the operator can finish the operations to the database without writing the SQL sentence.

The procedure control ability: including such basic procedure operations as condition judgment, branch, loop, etc.

The service generated by the service procedure editing module **13** is stored on the disc in the form of file, and the service executing module **14** executes the service steps defined in the service file by reading and parsing the service file.

### (4) service executing module 14

The service executing module **14** is the execution machine of the general M2M service platform of this M2M and the core of the whole platform. This module parses and executes the service generated by the service procedure editing module **13** and accesses the service data defined by the user during the procedure. For the convenience of the connection of the heterogeneous database, the service executing module **14** includes a database agent submodule **149** which is connected to the heterogeneous database of an enterprise using java database connectivity (JDBC) to enable the service to have the ability of accessing the heterogeneous database transparently.

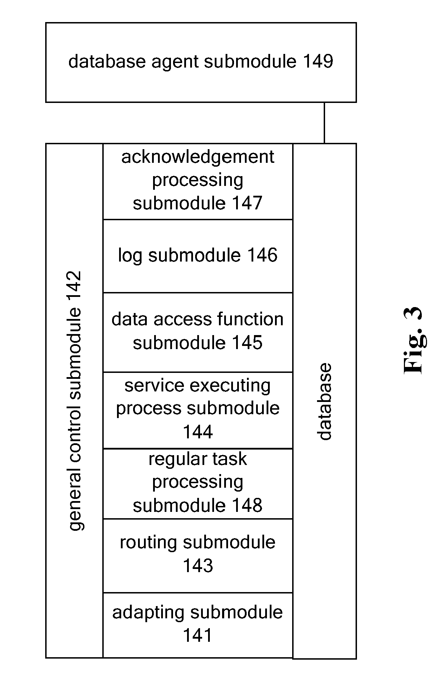

Fig. 3 is a schematic diagram of an M2M service platform service executing module **14** according to the embodiments of the present invention As shown in Fig. 3, the service executing module **14** includes an adapting submodule **141,** a general control submodule **142,** a routing submodule **143,** a service executing process submodule **144,** a data access function submodule **145,** a log submodule **146,** an acknowledgement submodule **147,** a timing task process submodule **148** and a database agent submodule **149.**

The adapting submodule **141** is connected to the platform interface module **16** to complete the adaptation/interface function of the service. It is divided according to the function to include: a communication interface module completing receiving/sending SMS, multimedia messages, USSD, and WAP, an interface between these modules and a mobile short message gateway (industry gateway, etc.), and interface (interface with the internal system of a customer) function modules of such as http, ftp, file. Each function forms (becomes) one thread independently.

The general control submodule **142** completes the control function for the service executing module **14.** It controls each submodule in the service executing module **14,** has a message interface with each submodule, achieves the activation and deactivation of the service on the executing platform, and controls the activation and deactivation function of each module.

The routing submodule **143** mainly completes the following: after having received a message from the adapting submodule **141,** searching the corresponding service logic according to an instruction, and then sending this message and the service ID to the service executing process submodule **144** to have it processed by the service executing process submodule **144.**

The service executing process submodule **144,** completing the parsing of the script of the service logic and performing corresponding actions according to the service procedure, is the pivot module of the whole platform. Considering the efficiency, the service executing process submodule **144** starts multi-threads internally and reads out the service script and parses it when initializing. It does not need to repeat the parsing when executing the service procedure. Additionally, the asynchronous mode is used for interacting message with other modules.

The data access function submodule **145** mainly completes the following: interfacing with the database and performing connection pool management and database operation. As to different databases, the operations such as connection, disconnection of the database are completed according to the service configuration.

The log submodule **146** provides a common log module function of the service executing module **14,** and the log of each module is uniformly sent to this module for process.

The acknowledgement submodule **147** uniformly processes the acknowledgements and stores them into the database.

The timing task process submodule **148** scans the database regularly, acquires the service logic to be executed or the short message to be sent, and requests the service executing process submodule **144** or adapting submodule **141** for process according to different categories.

The database agent submodule **149** mainly processes the connection management and database operations with the heterogeneous database of the peripheral interface. For the sake of convenience, this module is connected to an enterprise database using JDBC.

### (5) service debugging module 15

The service debugging module **15** mainly completes the simulation test of the service, when the user or application developer finishes the writing of service logic, it can be loaded into the service executing module **14** and then the service debugging module **15** performs simulation test to it. In order to avoid the effect of the network such as firewall, the simulation test of the service is performed in manner of WEB.

The service debugging module **15** provides a terminal simulation interface, and the tester can input a command string on the terminal simulation interface. The service debugging module **15** reads the command string written by the tester and sends it to the service executing module **14,** and the service executing module **14** completes the execution of the service procedure. When the service needs to send a message to the terminal, it sends the message to the service debugging module **15,** and the service debugging module **15** displays the received data. Additionally, when it needs to display the log record on the service debugging module **15** when testing, the service executing module **14** writes the log generated by this testing service into the database, and the service debugging module **15** can see the log information by refreshing regularly.

### (6) platform interface module 16

The platform interface module **16** mainly completes the interface between the service executing module **14** and the M2M platform. The message of the M2M terminal is first sent to the M2M platform, and the M2M platform forwards the message to the platform interface module **16** according to the M2M platform and application interface specification defined by the operator.

The platform interface module **16** parses the terminal message forwarded by the M2M platform, converts this message into the internal message format, and then forwards it to the adapting submodule **141** of the service executing module **14.**

Additionally, the platform interface module **16** is further used for encapsulating the message sent by the adapting submodule **141,** completing the encryption and decryption of the message and the parsing and encapsulation of the message (the packet) according to the M2M platform and application interface specification defined by the operator, and sending it to the M2M platform.

A working method of an M2M service platform is further provided according to the embodiments of the present invention.

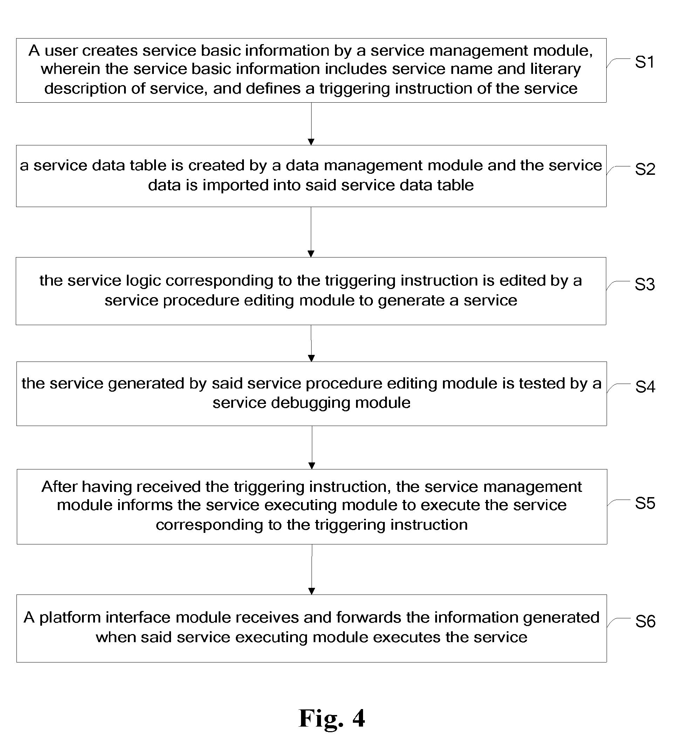

Fig. 4 is a schematic diagram of the flow of a working method for an M2M service platform according to the embodiments of the present invention. As shown in Fig. 4, the working method for an M2M service platform according to the embodiments of the present invention comprises the following steps:
Step S1: A user creates service basic information by a service management module, wherein the service basic information includes service name and literary description of service, and defines a triggering instruction of the service, i.e. defines which instruction the service uses for trigger;
Step S2: a service data table is created by a data management module and the service data is imported into said service data table;
   In the above step S2, first, the data management module defines the data structure of the service data, and the user inputs data according to this data structure, and then the data management module generates corresponding sentences according to the input data of the user and creates a service data table in the database.
Step S3: the service logic corresponding to the triggering instruction is edited by a service procedure editing module to generate a service;
Step S4: the service generated by said service procedure editing module is tested by a service debugging module;
Step S5: After having received the triggering instruction, the service management module informs the service executing module to execute the service corresponding to the triggering instruction; and
Step S6: A platform interface module receives and forwards the information generated when said service executing module executes the service.

Hereinafter, the application scene of security and protection of one community is taken as an example to describe the step of creating a new M2M application:
Scene introduction: the device for security and protection of one certain community monitors that there is someone intruding abnormally, and this sensor sends a message to a common M2M service platform, and the platform sends an alarm notification to each proprietor according to the pre-recorded proprietor data.
First step: A user creates by a service management module the service basic information, with the service name being "alarm notification service", literary description of service and the triggering instruction of the service being defined as "YCCR";
Second step: defining the data structure of the service data and creating a service data table by a data management module, wherein this service data table is the contact information of the proprietors of the community, the fields of the table includes such information as proprietor name, cell phone number of the proprietor, and then importing the data of the needed proprietor contact information into the corresponding service data table in batches;
Third step: editing the service logic by a service procedure editing module. This service logic first parses that the terminal uplink instruction is "YCCR", which is abnormal intrusion notification instruction, then executes the "abnormal intrusion notification" branch of the service procedure, inquires the contact information of the proprietor in the database, and finally generates a notification short message and sends it to the cell phone of the proprietor;
Fourth step: performing simulation test by a service debugging module. "YCCR" is input at the simulation terminal and the sending operation is selected, and the service debugging module receives the instruction, executes the service, generates a notification short message according to the settings of the procedure, and downwardly sends it to the simulation terminal, and the simulation terminal displays the contents downwardly sent by the service debugging module;
Fifth step: A service management module receives "YCCR", informs the service executing module to execute the service, generates the notification short message according to the settings of the service logic, and downwardly sends it to a platform interface module; and
Sixth step: The platform interface module downwardly sends the notification short message to the cell phone of the proprietor

As compared to the prior art, the M2M service platform and the working method thereof of the present invention not only meet the personalized demand of various users and also provide a convenient and fast service creating method for the user by using a service procedure editing module to combine function units, edit a service logic, and quickly generates an M2M application defined by the user himself. Additionally, this M2M service platform has the general (common) service creating ability and debugging function, and different services can use the same M2M service platform, which makes the costs of developing new M2M applications lower, the period shorter, the deployment costs of new M2M applications lower, and the difficulty of debugging smaller, which is helpful to increase the popularization rate of M2M service platform and service in the personal and household application fields.

The above description is only to illustrate the preferred embodiments but not to limit the present invention. Various alterations and changes to the present invention are apparent to those skilled in the art. The scope defined in the present invention shall comprise any modification, equivalent substitution and improvement within the spirit and principle of the present invention.

## Claims

1. A M2M service platform, **characterized by** comprising a service procedure editing module, a service management module and a service executing module;
said service procedure editing module configured to combine function units, edit a service logic, and generate a service;
said service management module configured to load and manage said service and send a notification to said service executing module; and
said service executing module configured to receive the notification from said service management module, parse a script of said service logic, and performing a corresponding action according to the parsed result.

2. The platform according to claim 1, **characterized by** further comprising a data management module which is configured to create a service data table and import service data into said service data table, wherein said service executing module inquires service data relevant to a service according to said service data table if the relevant data is needed, when said service executing module is executing the service.

3. The platform according to claim 2, **characterized in that** said data management module comprises a service data defining submodule and a service data importing submodule, said service data defining submodule configured to define a data structure of service data to allow a user to input data according to the data structure, generate a corresponding sentence according to the input data of the user, and create said service data table in a database; and said service data importing submodule configured to import said service data selected by the user into said service data table.

4. The platform according to claim 3, **characterized in that** said data management module further comprises a service data displaying submodule, said service data displaying submodule configured to provide a user interface to allow the user to select a service data table created by himself or authorized to access.

5. The platform according to claim 1, **characterized in that** said service executing module comprises a database agent submodule, said database agent submodule configured to use a java database connectivity, JDBC, to connect to a heterogeneous database so as to allow said service executing module to inquire service data relevant to the service in said heterogeneous database if the relevant data is needed, when said service executing module is executing the service.

6. The platform according to claim 1, **characterized by** further comprising a platform interface module, said platform interface module configured to receive and forward information generated when said service executing module is executing a service.

7. The platform according to claim 6, **characterized in that** said service executing module comprises an adapting submodule, said adapting submodule connected to said platform interface module to complete adaptation and interface function of a service.

8. The platform according to claim 1, **characterized by** further comprising a service debugging module, said service debugging module configured to test a service generated by said service procedure editing module.

9. A working method for an M2M service platform, **characterized by** comprising following steps:
combining function units, editing a service logic, and generating a service by a service procedure editing module;
loading and managing said service and sending a notification to a service executing module by a service management module; and
receiving the notification from said service management module by the service executing module, parsing a script of said service logic, and performing a corresponding action according to the parsed result.

10. The method according to claim 9, **characterized in that** said function unit is provided with at least one fundamental ability of constructing said service logic, said fundamental ability including communication ability, file access ability, calculating ability, database access ability, and procedure control ability.
